# EUROPEAN PATENT SPECIFICATION

(11) **EP 1 371 543 B1**
(45) Date of publication and mention of the grant of the patent: **23.09.2009**
(21) Application number: 03253614.6
(22) Date of filing: 07.06.2003
(51) Int. Cl.: B62D 63/00

(54) **Trailer with car lifting means**
Anhänger mit Fahrzeughebeeinrichtung
Remorque avec moyens de levage pour voiture

(30) Priority: 12.06.2002 GB 0213360
(43) Date of publication of application: 17.12.2003
(73) Proprietor: McCullagh, Tim Michael, Saltburn TS12 1JD (GB); McCullagh, John Micheal, Great Smeaton Northallerton DL6 2HN (GB); McCullagh, Rolf Michael, Victoria Terrace Saltburn by Sea TS12 1HN (GB)
(72) Inventor: Everard, John, Hull, East Yorkshire HU9 1PA (GB)
(74) Representative: W.P. Thompson & Co.

(56) References cited:
- DE-U1- 9 400 489
- US-A- 3 913 496
- US-A- 4 221 420
- US-A- 6 152 674

## Description

The present invention relates to a trailer according to the preamble of claim 1. A trailer of this type is known from DE 9400489 U.

Open car trailers generally comprise a wheeled chassis supporting a flat deck and having a towing hitch which enables the trailer to be connected to a towing vehicle. In use a car to be transported is driven over ramps up onto the deck and is secured in place with chocks, chains and the like. Open car trailers are commonly used for transporting racing cars and karts, and vintage cars to and from racing circuits, shows and the like when they cannot be driven on the open road. Open car trailers are also used for picking up and transporting cars which have broken down or been involved in an accident.

Where a car has broken down or been involved in an accident on the road or on a racing track only limited maintenance and repair work can be carried out on it in the field, but often this is simply due to the fact that the car cannot be safely raised off the ground to allow full-access to the underside thereof. It is possible to gain limited access to the underside of a car by partially lifting it off the ground on a mechanical or hydraulic jack. However, this limited access does not allow the full range of maintenance and repair work to be carried out and great care must be exercised as there are safety implications in the use of such equipment. Usually it will be necessary to transport the car to a garage where there is appropriate lifting equipment for the work to be carried out. Obviously, this means lost time and additional expense.

It is an object of the present invention to provide a trailer which has the facility of allowing a car to be raised above the deck thereby allowing full access to the underside of the car.

According to the present invention there is provided a trailer comprising a wheeled chassis, a deck supported on the chassis and vehicle lifting means **characterised in that** the vehicle lifting means comprising a pair of spaced lifts each of which is engageable directly with a vehicle on the deck and is extendible/retractable to raise a vehicle completely from/lower the vehicle to the deck.

Preferably, the lifting means comprises a pair of spaced scissor lifts, each of which is provided with means for engaging with a sill of a car. The sill engagement means may comprise a suitable shaped plate mounted on the end of the scissors. The aperture may be of the same shape as the sill engaging plate, thus giving the deck a uniform appearance when the scissor lifts are retracted. Preferably, the scissor lifts are positioned in the deck of the open car trailer so as to ensure that when a car is driven onto the deck each of the scissor lifts is substantially in alignment with a respective sill thereof.

Preferably, an adjustable leg is provided at each corner of the open car trailer, which legs serve to level and stabilise the trailer on the ground. Conveniently, the adjustable legs are adapted to be stowed under the chassis when not in use. A safety interlock may be provided between the legs and the scissor lifts which prevents operation of the scissor lifts if all four legs have not been extended. Preferably, a level sensor is provided in the deck of the open car trailer which facilitates levelling of the deck on the adjustable legs. The level sensor may comprise an indicator which shows where the trailer is level after manually adjusting the legs, or it may be connected to a mechanism which automatically adjusts the legs to level the deck. Preferably, an interlock is provided between the level sensor and the scissor lifts which prevents operation of the scissor lifts if the deck is not level within a predetermined tolerance.

In one embodiment of the invention the trailer is provided with front, end and side panels which can be folded down flat with the deck to increase the effective surface area thereof. The panels are preferably hinged to the deck. Conveniently, the panels are supported on telescopic supports which can be extended from the chassis of the open car trailer.

An embodiment of the present invention will now be described, by way of example, with reference to the accompanying drawings, in which:
Figure 1 shows a general perspective view of a trailer embodying the present invention;
Figure 2 shows a general perspective view of the chassis of the trailer shown in Figure 1; and
Figure 3 shows a general perspective of the trailer shown in Figure 1 with the end panels and side panels dropped down, and the scissor lifts raised to support a vehicle.

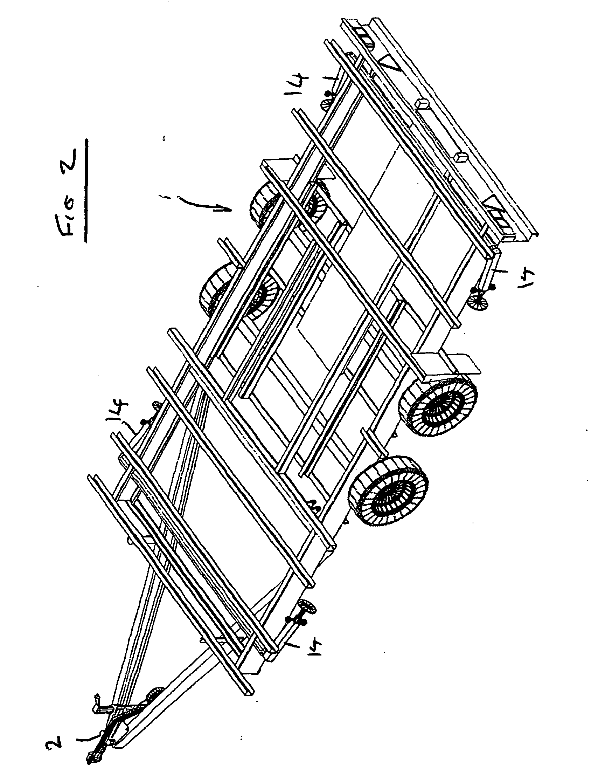

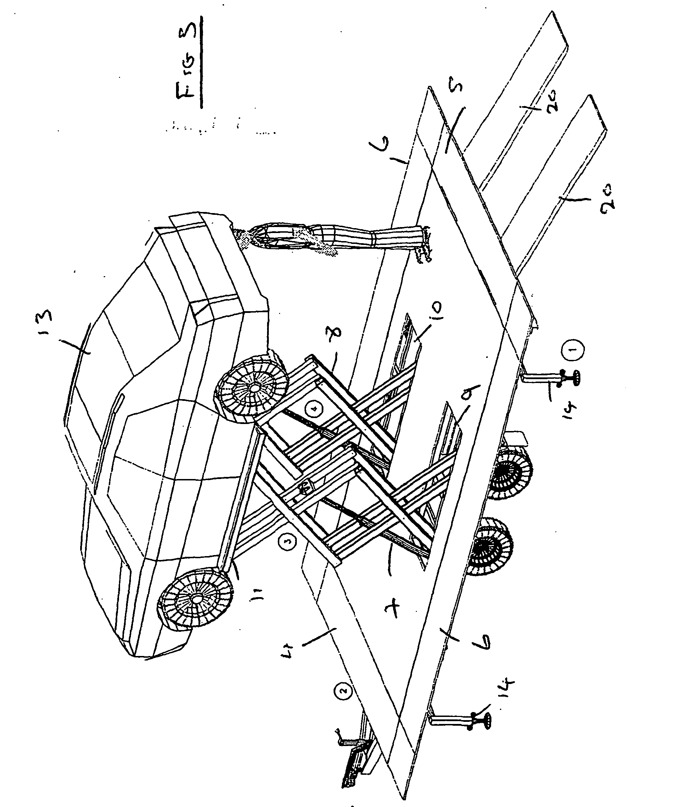

Referring to the drawings there is shown an open car trailer comprising a four wheeled chassis 1, best seen in Figure 2, having a towing hitch 2 at the forward end thereof to facilitate connection to the tow bar of a towing vehicle (not shown). The chassis 1 supports a deck 3 having front, end and side panels 4, 5, 6 respectively. Normally, only the end panel 5 would be hinged to allow it to be swung down and ramps 20 placed adjacent to the end of the deck 3 so that a car can be driven onto the deck and secured there. However, with the open car trailer of the invention all four panels 4 to 6 are hinged to the edges of the deck 3 and can be optionally folded down level with the deck 3. This allows access to the deck 3 for the purpose of loading a car, but also increases the effective size of the deck 3 as shown in Figure 3, thus providing a convenient work platform. When raised the panels 4 to 6 can be held in place with clips, bolts or interlocks as deemed appropriate.

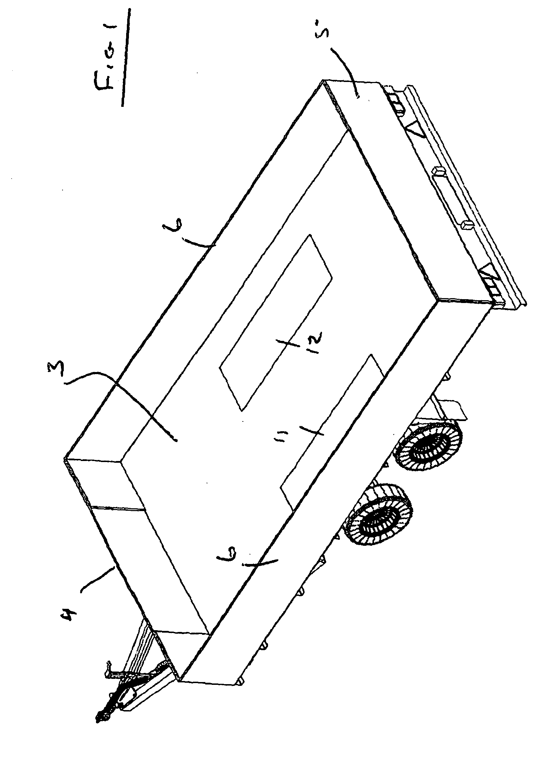

A pair of scissor lifts 7 and 8 are mounted in the chassis 1, each beneath a respective aperture 9 and 10 in the deck 3 itself. The scissors lifts 7 and 8 are of essentially conventional design, except that each is provided with a sill engaging plate 11 and 12 at the free end thereof. As can best be seen in Figure 1 the sill engage plates 11 and 12 form a close fit in the apertures 9 and 10 when the scissor lifts 7 and 8 are retracted, thus giving the deck 3 a uniform appearance. As shown in Figure 3 when the scissor lifts 7 and 8 are extended each engages with the sill of a car 13 situated on the deck 3 via the sill engaging plates 11 and 12 to lift the car 13 above the deck 3. With the car 13 raised above the deck 3 it is possible to fully inspect the underside and, where necessary, carry out work on the car 13.

As can best be seen in Figure 2, a stabilising and levelling leg 14 is provided at each comer of the chassis 1. All four legs are pivotally connected to the side of the chassis so that they can be swung down into use when a car 13 is to be lifted on the scissor lifts 7 and 8. In the absence of some form of levelling and stabilising mechanism for the deck, it would not be safe to work under a car supported on the scissor lifts 7 and 8. The legs 14 may be adjusted manually with the aid of a level sensor (not shown) mounted in the deck 3 to ensure that everything is set up properly. However, it may be preferable to provide automatic adjustment of the legs 14 using a level sensor. Automatic levelling mechanisms suitable for use with the open car trailer of the invention are already to be found in mobile homes, diggers, and the like. As an added safety feature the legs 14 and the level sensor may be connected to interlocks which prevent the scissor lifts 7 and 8 from operating until the legs are extended downwardly and the deck 3 is levelled. When not in use, the legs 14 are simply pivoted upwardly parallel to the sides of the chassis and out of the way.

In use, a car driven up onto the deck of a trailer in accordance with the invention can be raised above the deck to allow inspection of the underside and, where necessary, for maintenance and repair work to be carried out. The trailer of the invention is particularly suitable for use by rally drivers, racing car enthusiasts and the like in that it allows work to be carried out on a car by the side of the road or track, thus avoiding the need to return the car to a garage. In this regard, it will be understood that the trailer can easily be brought up to the car and the car winched or pushed onto the deck if it cannot be driven there. The trailer may also be used by the breakdown services to attempt simple repairs to a car by the side of the road. If the car cannot be repaired by the side of the road it can be loaded onto the open car trailer and towed to a garage for more thorough inspection.

## Claims

1. A trailer comprising a wheeled chassis (1), a deck (3) supported on the chassis (1) and vehicle lifting means (7,8), **characterised in that** the vehicle lifting means (7, 8) comprises a pair of spaced lifts each of which is engageable directly with a vehicle on the deck and is extendible/retractable to raise a vehicle completely from/lower the vehicle to the deck (3).

2. A trailer according to claim 1, **characterised in that** the lifting means (7, 8) comprises a pair of spaced scissor lifts, each of which is provided with means (11, 12) for engaging with the sill of a car.

3. A trailer according to claim 2, **characterised in that** the sill engagement means (11, 12) comprises a suitably shaped plate mounted on the end of each scissor lift.

4. A trailer according to claim 3, **characterised in that** each of the sill engagement plates (11, 12) is adapted to be received in and form a close fit with the respective aperture (9, 10) in the deck (3) in the retracted position.

5. A trailer according to any preceding claim, **characterised in that** an adjustable leg (14) is provided at each corner of the open car trailer, which legs serve to level and stabilise the trailer on the ground.

6. A trailer according to claim 5, **characterised in that** the adjustable legs (14) are adapted to be stowed under the chassis (1) when not in use.

7. A trailer according to claim 5 or 6, **characterised in that** a safety interlock is provided between the legs and the scissor lifts which prevents operation of the scissor lifts if all four legs have not been extended.

8. A trailer according to any preceding claim, **characterised in that** a level sensor is provided in the deck of the open car trailer which facilitates levelling of the deck on the adj ustable legs.

9. A trailer according to claim 8, **characterised in that** the level sensor comprises an indicator which shows where the trailer is level after manually adjusting the legs, or it may be connected to a mechanism which automatically adjusts the legs to level the deck.

10. A trailer according to claim 8 or 9, **characterised in that** an interlock is provided between the level sensor and the scissor lifts which prevents operation of the scissor lifts if the deck is not level within a predetermined tolerance.

11. A trailer according to any preceding claim, **characterised in that** the trailer is provided with front, end and side panels (4, 5, 6) which can be folded down flat with the deck to increase the effective surface area thereof.

12. A trailer according to claim 11, **characterised in that** the panels (4, 5, 6) are preferably hinged to the deck.

13. A trailer according to claim 12, **characterised in that** the panels are supported on telescopic supports which can be extended from the chassis of the open car trailer.

## Patentansprüche

1. Anhänger, der ein Radfahrgestell (1), eine auf dem Fahrgestell (1) ruhende Plattform (3) und ein Fahrzeughebemittel (7, 8) umfasst, **dadurch gekennzeichnet, dass** das Fahrzeughebemittel (7, 8) ein Paar beabstandete Heber umfasst, die jeweils unmittelbar an einem Fahrzeug auf der Plattform angreifen können und aus- und eingefahren werden können, um ein Fahrzeug vollständig von der Plattform (3) hochzuheben oder darauf abzusenken.

2. Anhänger nach Anspruch 1, **dadurch gekennzeichnet, dass** das Hebemittel (7, 8) ein Paar beabstandete Hebescheren umfasst, die jeweils mit Mitteln (11, 12) zum Angreifen an der Schwelle eines Autos versehen sind.

3. Anhänger nach Anspruch 2, **dadurch gekennzeichnet, dass** das Schwelleneingriffsmittel (11, 12) eine geeignet geformte Platte umfasst, die am Ende jeder Hebesehere montiert ist.

4. Anhänger nach Anspruch 3, **dadurch gekennzeichnet, dass** jede der Schwelleneingriffsplatten (11, 12) so gestaltet ist, dass sie in der eingefahrenen Position in der jeweiligen Öffnung (9, 10) in der Plattform (3) aufgenommen und damit eine enge Passung bildet.

5. Anhänger nach einem der vorherigen **dadurch gekennzeichnet, dass** ein verstellbarer Fuß (14) an jeder Ecke des offenen Autoanhängers vorgesehen ist, wobei die Füße zum Nivellieren und Stabilisieren des Anhängers auf dem Boden dienen.

6. Anhänger nach Anspruch 5, **dadurch gekennzeichnet, dass** die verstellbaren Füße (14) so gestaltet sind, dass sie unter dem Fahrgestell (1) verstaut werden, wenn sie nicht gebraucht werden.

7. Anhänger nach Anspruch 5 oder 6, **dadurch gekennzeichnet, dass** eine Sicherheitsverriegelung zwischen den Füßen und den Hebescheren vorgesehen ist, die einen Betrieb der Hebescheren verhütet, wenn alle vier Füße nicht ausgefahren sind.

8. Anhänger nach einem der vorherigen Ansprüche, **dadurch gekennzeichnet, dass** ein Nivelliersensor in der Plattform des offenen Autoanhängers vorgesehen ist, der das Nivellieren der Plattform auf den verstellbaren Füßen erleichtert.

9. Anhänger nach Anspruch 8, **dadurch gekennzeichnet, dass** der Nivelliersensor einen Anzeiger umfasst, der beim manuellen Verstellen der Füße anzeigt, wenn der Anhänger waagerecht steht, oder der mit einem Mechanismus verbunden werden kann, der die Füße automatisch verstellt, um die Plattform zu nivellieren.

10. Anhänger nach Anspruch 8 oder 9, **dadurch gekennzeichnet, dass** eine Verriegelung zwischen dem Nivelliersensor und den Hebescheren vorgesehen ist, die den Betrieb der Hebescheren verhütet, wenn die Plattform nicht innerhalb einer vorbestimmten Toleranz waagerecht ist.

11. Anhänger nach einem der vorherigen Ansprüche, **dadurch gekennzeichnet, dass** der Anhänger mit vorderen, hinteren und seitlichen Paneelen (4, 5, 6) versehen ist, die flach mit der Plattform heruntergeklappt werden können, um ihren wirksamen Oberflächenbereieh zu vergrößern.

12. Anhänger nach Anspruch 11, **dadurch gekennzeichnet, dass** die Paneelen (4, 5, 6) vorzugsweise an der Plattform angelenkt sind.

13. Anhänger nach Anspruch 12, **dadurch gekennzeichnet, dass** die Paneelen auf teleskopischen Stützen getragen werden, die vom Fahrgestell des offenen Autoanhängers ausgefahren werden können.

## Revendications

1. Remorque comprenant un châssis à roues (1), une plateau (3) soutent sur le châssis (1) est un moyen de levage de véhicule (7, 8) **caractérisée en ce que** le moyen de levage de véhicule (7, 8) comporte une paire d'élévateurs espacés, dont chacun peut directement engager un véhicule au plateau et est extensible et rétractable pour faire monter un véhicule entièrement depuis le plateau (3) et l'y descendre.

2. Remorque conforme à la revendication 1, **caractérisée en ce que** le moyen de levage (7, 8) comporte une paire d'élévateurs à ciseaux espacés, dont chacun est muni d'un moyen (11, 12) pour engager le bas de marche d'une voiture.

3. Remorque conforme à la revendication 2, **caractérisée en ce que** le moyen d'engager le bas de marche (11, 12) comprend une plaque de forme appropriée montée sur l'extrémité de chaque élévateur à ciseaux.

4. Remorque conforme à la revendications 3, **caractérisée en ce que** chacune des plaques d'engagement de bas de marche (11, 12) est adaptée pour être reçue dans et bien s'ajuster avec l'ouverture respective (9, 10) dans le plateau (3) en position rétractée.

5. Remorque conforme à une quelconque des revendications précédentes, **caractérisée en ce que** un pied réglable (14) est prévu à chaque coin de la remorque ouverte, cers pieds servant à mettre de niveau est stabiliser la remorque sur le sol.

6. Remorque conforme à la revendication 5, **caractérisée en ce que** les pieds réglables (14) sont adaptés pour être repliés sous le châssis (1) quand ils ne sont pas utilisés.

7. Remorque conforme à la revendication 5 ou 6, **caractérisée en ce qu'**un verrouillage de sécurité est prévu entre les jambes et les élévateurs à ciseaux pour empêcher le fonctionnement des élévateurs à ciseaux si les quatre jambes réglables n'ont pas toutes été étendues.

8. Remorque conforme à une quelconque des revendications précédentes, **caractérisée en ce qu'**un capteur de niveau est prévu dans le plateau de la remorque ouverte pour faciliter la mise a niveau du plateau sur les pieds réglables.

9. Remorque conforme à la revendication 8, **caractérisée en ce que** le capteur de niveau comprend un indicateur qui montre quand la remorque est de niveau une fois les pieds réglés manuellement, ou qui peut être connecté à un mécanisme qui règle automatiquement les pieds pour mettre le plateau de niveau.

10. Remorque conforme à la revendication 8 ou 9, **caractérisée en ce que** un dispositif de verrouillage est prévu entre le capteur de niveau et les élévateurs à ciseaux pour empêcher le fonctionnement des élévateurs à ciseaux si le plateau n'est pas de niveau dans une zone de tolérance prédéterminée.

11. Remorque conforme à une quelconque des revendications précédentes, **caractérisée en ce que** la remorque est munie de panneaux avant, arrière et de côté (4, 5, 6) qui peuvent se rabattre sur le même plan que le plateau pour augmenter la surface utile de celui-ci.

12. Remorque conforme à la revendication 11, **caractérisée en ce que** les panneaux (4, 5, 6) son de préférence montés à charnières sur le plateau.

13. Remorque conforme à la revendication 12, **caractérisée en ce que** les panneaux sont soutenus par des supports télescopiques qui peuvent s'étendre depuis le châssis de la remorque ouverte.
